(19) Europäisches Patentamt / European Patent Office / Office européen des brevets

(11) **EP 4 307 319 A1**

(12) **EUROPEAN PATENT APPLICATION**
published in accordance with Art. 153(4) EPC

(43) Date of publication:
**17.01.2024  Bulletin 2024/03**

(21) Application number: **22767037.9**

(22) Date of filing: **04.03.2022**

(51) International Patent Classification (IPC):
**H01B 1/06** (2006.01)   **H01B 1/10** (2006.01)
**H01B 13/00** (2006.01)   **H01M 10/0562** (2010.01)

(52) Cooperative Patent Classification (CPC):
**H01B 1/06; H01B 1/10; H01B 13/00;**
**H01M 10/0562;** Y02E 60/10

(86) International application number:
**PCT/JP2022/009502**

(87) International publication number:
**WO 2022/191080 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.03.2021  JP 2021039746**

(71) Applicant: **Mitsui Mining & Smelting Co., Ltd.
Shinagawa-ku
Tokyo 141-8584 (JP)**

(72) Inventors:
• **ICHIKI, Katsuya**
  **Ageo-shi, Saitama 362-0021 (JP)**
• **TAKAHASHI, Tsukasa**
  **Ageo-shi, Saitama 362-0021 (JP)**

(74) Representative: **Novagraaf Technologies
Bâtiment O2
2, rue Sarah Bernhardt
CS90017
92665 Asnières-sur-Seine Cedex (FR)**

(54) **SOLID ELECTROLYTE AND METHOD FOR PRODUCING SAME**

(57)  A solid electrolyte contains: a lithium (Li) element; a phosphorus (P) element; a sulfur (S) element; and an X element, where X represents at least one halogen element. The solid electrolyte has a peak $P_1$ and a peak $P_2$ when, in an X-ray diffraction pattern obtained by measuring the solid electrolyte with an X-ray diffractometer (XRD) using CuKα1 rays and CuKα2 rays, a diffraction pattern in at least any one of a range of $2\theta = 25.6 \pm 0.8°$, a range of $2\theta = 30.2 \pm 0.8°$, and a range of $2\theta = 31.6 \pm 0.8°$ is subjected to peak separation. The peak $P_1$ and the peak $P_2$ are derived from different phases.

Fig. 2

EP 4 307 319 A1

## Description

### Technical Field

The present invention relates to a solid electrolyte and a method for producing the same.

### Background Art

In recent years, a solid electrolyte that can replace a liquid electrolyte used in many liquid-based batteries has attracted attention. A solid-state battery that contains a solid electrolyte is expected to be brought into practical use as a battery that is not only safer than a liquid-based battery that contains a flammable organic solvent, but also has high energy density.

The technique disclosed in Patent Literature 1 is known as a conventional technique for a solid electrolyte, for example. In recent years, studies are actively being conducted to obtain a solid electrolyte that provides even better performance. Various investigations are being performed on, for example, a solid electrolyte with high ion conductivity.

### Citation List

Patent Literature

Patent Literature 1: US 2016/156064A1
Patent Literature 2: EP 3026749A1

### Summary of Invention

It is an object of the present invention to provide a solid electrolyte that has higher ion conductivity.

The present invention provides a solid electrolyte containing: a lithium (Li) element; a phosphorus (P) element; a sulfur (S) element; and an X element, where X represents at least one halogen element, wherein the solid electrolyte has a peak $P_1$ and a peak $P_2$ when, in an X-ray diffraction pattern obtained by measuring the solid electrolyte with an X-ray diffractometer (XRD) using CuK$\alpha$1 rays and CuK$\alpha$2 rays, a diffraction pattern in at least any one of a range of $2\theta = 25.6 \pm 0.8°$, a range of $2\theta = 30.2 \pm 0.8°$, and a range of $2\theta = 31.6 \pm 0.8°$ is subjected to peak separation, and the peak $P_1$ and the peak $P_2$ are derived from different phases.

The present invention also provides a method for producing a solid electrolyte including the steps of: obtaining a raw material composition by mixing a lithium (Li) element source, a phosphorus (P) element source, a sulfur (S) element source, and a halogen (X) element source; and calcining the raw material composition at a temperature of higher than 500°C and lower than 700°C.

### Brief Description of Drawings

[Fig. 1] Fig. 1(a) is a diagram showing an example of an X-ray diffraction pattern obtained by measuring a conventional solid electrolyte of a single phase using an X-ray diffractometer, and Fig. 1(b) is a diagram obtained by separating the X-ray diffraction pattern shown in Fig. 1(a) into two peaks.

[Fig. 2] Fig. 2(a) is a diagram showing an example of an X-ray diffraction pattern obtained by measuring a solid electrolyte according to the present invention using an X-ray diffractometer, and Fig. 2(b) is a diagram obtained by separating the X-ray diffraction pattern shown in Fig. 2(a) into two peaks.

[Fig. 3] Fig. 3 is a diagram showing X-ray diffraction patterns of solid electrolytes obtained in Example 2 and Comparative Example 2.

[Fig. 4] Fig. 4 is a diagram showing X-ray diffraction patterns of solid electrolytes obtained in Example 3 and Comparative Example 3.

### Description of Embodiment

Hereinafter, the present invention will be described based on a preferred embodiment thereof. A solid electrolyte according to the present invention contains at least a lithium (Li) element, a phosphorus (P) element, a sulfur (S) element, and a halogen (X) element.

The X element contained in the solid electrolyte of the present invention is at least one halogen element, and more specifically, at least one element selected from a chlorine (Cl) element, a bromine (Br) element, and an iodine (I) element. The X element may be any one of or a combination of two or more of the elements listed above.

From the viewpoint of increasing the lithium ion conductivity of the solid electrolyte of the present invention, the solid electrolyte preferably contains at least a Cl element as the X element. In particular, it is preferable that the solid electrolyte contains only a Cl element as the X element because the solid electrolyte that has two or more different phases, which will be described below, is likely to be obtained.

The solid electrolyte of the present invention is characterized by a feature in that the solid electrolyte has two or more different phases. The two or more different phases are crystalline phases. As a result of studies conducted by the inventors of the present application, it was found that, as a result of having two or more different phases, the solid electrolyte of the present invention can exhibit even better ion conductivity than conventional solid electrolytes. The reason is not completely clear, but the inventors of the present application consider the reason as follows. Of course, the scope of the present invention is not limited to the theory described below. It is considered that the two or more different phases are crystalline phases, and they are present in one crystal grain. Each of the plurality of crystal phases present in one crystal grain contains a Li element, a P element, an S element, and an X element, but the compositions are different from each other. As a result of at least one of the plurality of crystal phases present in one crystal grain being a high-ion conductive phase, the solid electrolyte has high ion conductivity as a whole. Alternatively, it is considered that, as a result of interface resistance between the plurality of crystal phases present in one crystal grain being small, the solid electrolyte has high ion conductivity as a whole.

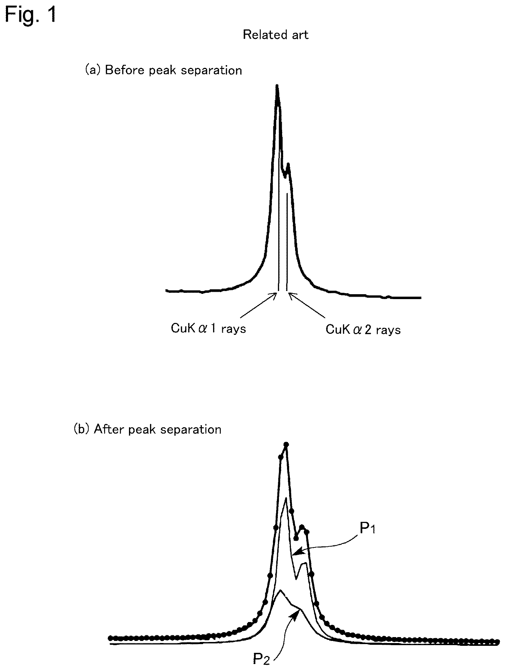

Whether or not the solid electrolyte of the present invention has two or more different phases can be confirmed based on an X-ray diffraction pattern obtained by measuring the solid electrolyte using an X-ray diffractometer (XRD). To be specific, whether or not the solid electrolyte of the present invention has two or more different phases can be confirmed based on an X-ray diffraction pattern obtained by using X rays of two different wavelengths as ray sources for XRD. As X-ray sources that provide X rays of two different wavelengths, it is convenient to use $CuK\alpha1$ rays and $CuK\alpha2$ rays. $CuK\alpha1$ rays have a wavelength of 0.1540562 nm, and $CuK\alpha2$ have a wavelength of 0.1544390 nm. The intensity ratio of $CuK\alpha1$ rays and $CuK\alpha2$ rays is theoretically about 2:1. Accordingly, in the case where a solid electrolyte of a single phase is subjected to XRD measurement, when the solid electrolyte is simultaneously irradiated with $CuK\alpha1$ rays and $CuK\alpha2$ rays, an X-ray diffraction pattern shown in Fig. 1(a) is obtained. As shown in the X-ray diffraction pattern, a diffraction line derived from $CuK\alpha1$ rays and a diffraction line derived from $CuK\alpha2$ rays are superimposed at an intensity ratio of 2:1.

When the diffraction pattern in which the diffraction lines are superimposed as shown in Fig. 1(a) is subjected to mathematical peak separation based on a minimum square root method, the diffraction pattern is separated into peaks $P_1$ and $P_2$ whose peak tops are at the same position as shown in Fig. 1(b). The term "peak" used in the present invention refers to where a diffraction line derived from $CuK\alpha1$ rays and a diffraction line derived from $CuK\alpha2$ rays are superimposed at an intensity ratio of 2:1.

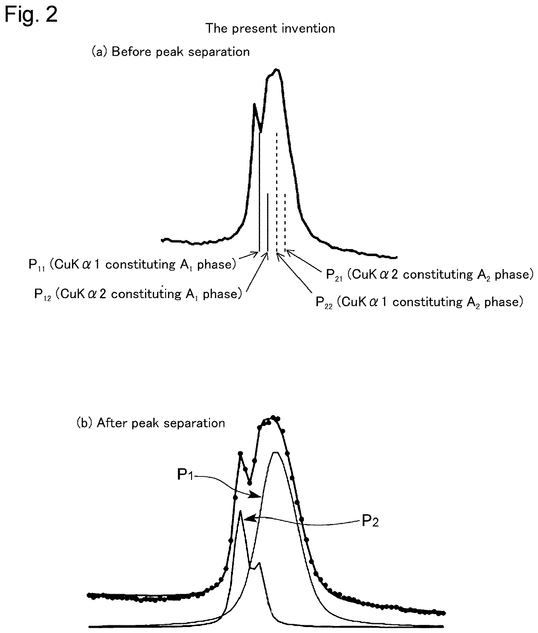

As will be described in Examples given later, diffraction intensity data actually acquired through XRD are discrete (for example, the step width $2\theta$ indicated by the horizontal axis shown in Fig. 2(b) is 0.02°). Accordingly, the peak tops of two peaks $P_1$ and $P_2$ obtained through the mathematical peak separation based on the minimum square root method may not be at strictly the same position, and the positions of the peak tops may be slightly different. That is, the positions of the peak tops of two peaks obtained through separation are theoretically the same, but the positions of the peak tops of two peaks obtained through mathematical peak separation may be slightly different. Accordingly, in the description of the present application, when the absolute value ($\Delta2\theta$) of the difference between the positions of the peak tops of two peaks $P_1$ and $P_2$ obtained through separation is 0.04° or less, the positions of the peak tops of the two peaks are deemed as the same.

On the other hand, when the solid electrolyte of the present invention is simultaneously irradiated with $CuK\alpha1$ rays and $CuK\alpha2$ rays, a diffraction pattern as described below is obtained. For the sake of convenience, the following description will be given based on an example in which the solid electrolyte of the present invention has two different crystal phases.

It is assumed here that the two different crystal phases are a phase $A_1$ and a phase $A_2$. When the solid electrolyte of the present invention that has a phase $A_1$ and a phase $A_2$ is simultaneously irradiated with $CuK\alpha1$ rays and $CuK\alpha2$ rays, as shown in Fig. 2(a), with respect to the phase $A_1$, a diffraction line $P_{11}$ derived from $CuK\alpha1$ rays and a diffraction line $P_{12}$ derived from $CuK\alpha2$ rays are observed at an intensity ratio of 2:1, and with respect to the phase $A_2$ phase, a diffraction line $P_{21}$ derived from $CuK\alpha1$ rays and a diffraction line $P_{22}$ derived from $CuK\alpha2$ rays are observed at an intensity ratio of 2:1. That is, a diffraction pattern in which four diffraction lines $P_{11}$, $P_{12}$, $P_{21}$, and $P_{22}$ are superimposed is obtained.

When the diffraction pattern in which the diffraction lines are superimposed as shown in Fig. 2(a) is subjected to mathematical peak separation based on a minimum square root method to separate the diffraction pattern into two peaks, as shown in Fig. 2(b), two peaks $P_1$ and $P_2$ whose peak tops are at different positions are observed. In the description of the present application, the peak $P_1$ is a peak at which the diffraction lines $P_{11}$ and $P_{12}$ are superimposed, and the peak $P_2$ is a peak at which the diffraction lines $P_{21}$ and $P_{22}$ are superimposed. In the case where two peak tops are observed such as $P_1$ shown in Fig. 2(b), one of the two peak tops that has higher intensity is defined as the peak top.

As described above, when a diffraction pattern obtained by simultaneously irradiating a solid electrolyte with $CuK\alpha1$ rays and $CuK\alpha2$ rays is separated into two peaks, and the two peaks obtained through the separation have peak tops at different positions, it is possible to determine that the solid electrolyte has two or more different crystal phases.

In the solid electrolyte of the present invention, from the viewpoint of further increasing the ion conductivity of the solid electrolyte, it is preferable that the solid electrolyte has a peak $P_1$ and a peak $P_2$ when, in an X-ray diffraction pattern obtained by measuring the solid electrolyte with XRD using $CuK\alpha1$ rays and $CuK\alpha2$ rays, a diffraction pattern in at least any one of a range of $2\theta = 25.6 \pm 0.8°$ (hereinafter, this range will also be referred to as "first range"), a range of $2\theta = 30.2 \pm 0.8°$ (hereinafter, this range will also be referred to as "second range"), and a range of $2\theta = 31.6 \pm 0.8°$ (hereinafter, this range will also be referred to as "third range") is subjected to peak separation, and the peak $P_1$ and the peak $P_2$ are derived from different phases. In particular, from the viewpoint of further increasing the ion conductivity of the solid electrolyte, it is preferable that, when diffraction patterns in at least two angle ranges out of the first to third ranges are subjected to peak separation, the solid electrolyte has a peak $P_1$ and a peak $P_2$ that are derived from different phases. It is more preferable that, when diffraction patterns in all of the first to third ranges are subjected to peak separation, the solid electrolyte has a peak $P_1$ and a peak $P_2$ that are derived from different phases.

In the solid electrolyte of the present invention, diffraction patterns may be observed at angles other than those of the first to third ranges described above. When compared in terms of intensity, the diffraction patterns observed in the first to third ranges exhibit very high intensity. For this reason, peak separation is performed on the diffraction patterns observed in the first to third ranges.

As described above, the solid electrolyte of the present invention has two or more different phases. The two or more different phases have different compositions, and thus have different lattice constants. As a result, as described above, when an XRD diffraction pattern is separated into a plurality of peaks, a plurality of peaks whose peak tops are at different positions are observed. It is preferable that, where two or more peaks derived from different phases are sequentially represented by $P_1$ and $P_2$ in this order from the low angle side, an angle difference $\Delta2\theta$ ($= 2\theta_2 - 2\theta_1$) between an angle $2\theta_1$ at the peak top position of $P_1$ and an angle $2\theta_2$ at the peak top position of $P_2$ is $0.04°$ or more, because the ion conductivity of the solid electrolyte is further increased. From the viewpoint of further making this advantage more prominent, the angle difference $\Delta2\theta$ is preferably $0.10°$ or more, and more preferably $0.11°$ or more. On the other hand, the upper limit value of the angle difference $\Delta2\theta$ is preferably $1.6°$ or less.

When each of the diffraction patterns obtained in the first to third ranges is separated into two peaks $P_1$ and $P_2$, there may be a case where the intensity of the peak $P_1$ is higher than that of the peak $P_2$, or vice versa. From the viewpoint of further increasing the lithium ion conductivity of the solid electrolyte, $I_1/I_2$ that is the ratio of intensity $I_1$ of the peak $P_1$ and intensity $I_2$ of the peak $P_2$ is preferably $0.8$ or less, and more preferably $0.4$ or less. The intensity $I_1$ of the peak $P_1$ and the intensity $I_2$ of the peak $P_2$ used in the description of the present application are parameters obtained when diffraction pattern peak separation based on a minimum square root method is performed. In the case where a plurality of peaks are observed, it is preferable that one of the plurality of peaks that has the highest peak intensity satisfies the above-described conditions.

When peak separation processing is performed on a diffraction pattern obtained by subjecting a mixture of a solid electrolyte that has a first phase of a single composition and a solid electrolyte that has a second phase of a single composition to XRD measurement, a plurality of peaks whose peak tops are at different positions are observed. However, this mixture does not necessarily have high lithium ion conductivity. The reason is that, when this mixture is used, it is not possible to reduce the interface resistance between two phases. That is, the solid electrolyte of the present invention is composed of a single substance (or in other words, the solid electrolyte is not composed of a mixture), and has two or more different crystal phases. Of course, it is also possible to use a configuration in which the solid electrolyte of the present invention is mixed with another solid electrolyte and used.

As described above, the solid electrolyte of the present invention contains a Li element, a P element, an S element, and an X element. As an example of the solid electrolyte, it is possible to use $Li_2S$-$P_2S_5$-LiX or the like, where X represents at least one halogen element. However, the solid electrolyte of the present invention is not limited thereto.

In particular, from the viewpoint of increasing the lithium ion conductivity of the solid electrolyte, it is preferable that the solid electrolyte that contains the elements described above contains a compound represented by a composition formula: $Li_aPS_bX_c$, where X represents at least one halogen element, a is a number of $3.0$ or more and $6.0$ or less, b is a number of $3.5$ or more and $4.8$ or less, and c is a number of $0.1$ or more and $3.0$ or less.

In the composition formula given above, a that represents the molar ratio of the Li element is, for example, preferably a number of $3.0$ or more and $6.0$ or less, more preferably $3.2$ or more and $5.8$ or less, and even more preferably $3.4$ or more and $5.4$ or less. Note that a may be a number less than $5.4$.

In the composition formula given above, b that represents the molar ratio of the S element is, for example, preferably a number of 3.5 or more and 4.8 or less, more preferably 3.8 or more and 4.6 or less, and even more preferably 4.0 or more and 4.4 or less. Note that b may be a number less than 4.4.

In the composition formula given above, c is, for example, preferably a number of 0.1 or more and 3.0 or less, more preferably 0.2 or more and 2.5 or less, and even more preferably 0.4 or more and 2.0 or less. The compound represented by the composition formula in which a, b, and c are within the ranges described above has sufficiently high lithium ion conductivity.

In particular, from the viewpoint of further increasing the lithium ion conductivity, in the solid electrolyte of the present invention, it is preferable that the value of X/P that is the molar ratio of the X element to the P element is greater than 1.0. From this viewpoint, the value of X/P is preferably 1.2 or more, and more preferably 1.6 or more. From the viewpoint that it is preferable to stably maintain the argyrodite structure, the value of X/P is preferably 2.0 or less.

In the present invention, the compound prepared by adjusting the amounts of materials to satisfy the composition formula $Li_aPS_bX_c$ may contain an element other than the Li element, the P element, the S element, and the X element. For example, the Li element may be partially replaced with another alkali metal element, the P element may be partially replaced with another pnictogen element, or the S element may be partially replaced with another chalcogen element.

From the viewpoint of increasing the lithium ion conductivity of the solid electrolyte, in particular, the solid electrolyte of the present invention preferably has a crystal phase of an argyrodite-type crystal structure. The term "argyrodite-type crystal structure" used herein refers to a crystal structure of a group of compounds derived from a mineral represented by the following chemical formula: $Ag_8GeS_6$. Whether or not the solid electrolyte of the present invention has a crystal phase of an argyrodite-type crystal structure can be confirmed by performing XRD measurement or the like. For example, in a diffraction pattern obtained through XRD measurement using $CuK\alpha 1$ rays, the crystal phase of an argyrodite-type crystal structure exhibits characteristic diffraction peaks at $2\theta = 15.3° \pm 1.0°$, $17.7° \pm 1.0°$, $25.6° \pm 1.0°$, $30.2° \pm 1.0°$, $31.6° \pm 1.0°$, and $44.7° \pm 1.0°$. Furthermore, the crystal phase of an argyrodite-type crystal structure may also exhibit, in addition to the diffraction peaks described above, characteristic diffraction peaks at, for example, $2\theta = 47.2° \pm 1.0°$, $51.7° \pm 1.0°$, $58.3° \pm 1.0°$, $60.7° \pm 1.0°$, $61.5° \pm 1.0°$, $70.4° \pm 1.0°$, and $72.6° \pm 1.0°$, depending on the types of elements that constitute the solid electrolyte. For identification of the diffraction peaks derived from the argyrodite-type crystal structure, it is possible to use, PDF data No. 00-034-0688, for example.

The solid electrolyte of the present invention has lithium ion conductivity when in a solid state. The solid electrolyte of the present invention preferably has lithium ion conductivity at, for example, room temperature, or in other words, at 25°C of 0.5 mS/cm or more, more preferably 1.0 mS/cm or more, even more preferably 1.5 mS/cm or more, and even much more preferably 4.0 mS/cm or more. The lithium ion conductivity can be measured using a method described in Examples given later.

The solid electrolyte of the present invention can be produced preferably using a method described below. A Li element source compound, a P element source compound, an S element source compound, and an X element source compound are used as raw materials. As the Li element source compound, for example, lithium sulfide ($Li_2S$) can be used. As the P element source compound, for example, phosphorus pentasulfide ($P_2S_5$) can be used. As the S element source compound, when the Li element source compound and/or the P element source compound contain a sulfide, the sulfide can be used as the S element source compound. As the X element source compound, a compound B (LiX) can be used. These raw materials are mixed such that the Li element, the P element, the S element, and the X element satisfy a predetermined molar ratio. Then, a raw material composition obtained by mixing these raw materials is calcined in an inert atmosphere or a hydrogen sulfide gas-containing atmosphere.

Particularly when the calcination temperature is within a later-described temperature range, by using an inert gas atmosphere such as, for example, a nitrogen atmosphere or an argon atmosphere as the calcination atmosphere, it is possible to successfully obtain a solid electrolyte in which a plurality of crystal phases are present in one crystal grain.

In particular, in the production method of the present invention, by adjusting the calcination conditions as described above, it is possible to obtain a solid electrolyte in which a plurality of crystal phases are present in one crystal grain. Specifically, as a result of studies conducted by the inventors of the present application, it was found that a plurality of crystal phases can be produced by performing calcination at a temperature higher than a conventionally used calcination temperature, for example, a temperature used in Patent Literature 1. From this viewpoint, it is preferable to set the calcination temperature to be higher than 500°C. On the other hand, if the calcination temperature is set to an excessively high temperature, a heterophase that impairs the lithium ion conductivity may be produced. For this reason, the calcination temperature is preferably set to be lower than 700°C. From the viewpoint described above, the calcination temperature is more preferably set to 540°C or higher and 660°C or lower and even more preferably 580°C or higher and 620°C or less.

The calcination time is preferably set to 1 hour or more and 7 hours or less, more preferably 2 hours or more and 6 hours or less, and even more preferably 3 hours or more and 5 hours or less as long as the calcination temperature is within the above-described range.

A calcined product obtained in the manner described above is subjected to a predetermined milling step. When milling the calcined product, the calcined product may be milled by performing dry milling, wet milling, or a combination of dry milling and wet milling.

When the calcined product is milled using dry milling, for example, a jet mill, a ball mill, a rod mill, a vibration ball mill, a planetary mill, a disc mill, or the like can be used. On the other hand, when the calcined product is milled using wet milling, various types of media mills can be used. Examples of the media mills that can be used include a ball mill, a bead mill, a paint shaker, a homogenizer, and the like.

When the calcined product is milled using wet milling, a milled product is separated into a solid electrolyte powder and a solvent after the wet milling. To obtain a solid electrolyte powder and a solvent separated from the milled product, for example, it is preferable to subject a slurry containing a solid electrolyte powder and an organic solvent to solid-liquid separation processing by performing an operation such as natural filtration, centrifugation, pressure filtration, vacuum filtration, or the like. Alternatively, the slurry may be subjected to hot-air drying or vacuum drying, without performing the operation.

The solid electrolyte obtained using the method described above can be used as a material for constituting a solid electrolyte layer, a positive electrode layer, or a negative electrode layer. Specifically, the solid electrolyte of the present invention can be used in a battery that includes a positive electrode layer, a negative electrode layer, and a solid electrolyte layer provided between the positive electrode layer and the negative electrode layer. That is, the solid electrolyte of the present invention can be used in a so-called solid-state battery. More specifically, the solid electrolyte of the present invention can be used in a lithium solid-state battery. The lithium solid-state battery may be a primary battery or a secondary battery. There is no particular limitation on the battery shape. For example, a laminate shape, a cylindrical shape, a prismatic shape, or the like can be used. The term "solid-state battery" used herein encompasses not only a solid-state battery that does not contain a liquid substance or a gel substance as the electrolyte, but also a solid-state battery that contains, for example, 50 mass% or less, 30 mass% or less, or 10 mass% or less of a liquid substance or a gel substance as the electrolyte.

In the case where the solid electrolyte of the present invention is contained in a solid electrolyte layer, the solid electrolyte layer can be produced using, for example, any of the following methods: a method in which a slurry that contains the solid electrolyte, a binder, and a solvent is dropped onto a substrate, and the slurry is spread using a doctor blade or the like; a method in which a substrate and the slurry are brought into contact with each other, and then cut using an air knife; a method in which a coating film is formed using a screen printing method or the like, and then heated and dried to remove the solvent; and the like. Alternatively, the solid electrolyte layer can also be produced by pressing the solid electrolyte of the present invention in the form of powder into a powder compact, and subjecting the powder compact to appropriate processing. From the viewpoint of balance between prevention of a short-circuit and volume capacity density, typically, the thickness of the solid electrolyte layer is preferably 5 $\mu$m or more and 300 $\mu$m or less, and more preferably 10 $\mu$m or more and 100 $\mu$m or less.

The solid electrolyte of the present invention is used together with an active material to constitute an electrode material mixture. The proportion of the solid electrolyte in the electrode material mixture is typically 10 mass% or more and 50 mass% or less. The electrode material mixture may also contain other materials such as a conductive aid and a binder as needed. An electrode layer such as a positive electrode layer and/or a negative electrode layer can be produced by mixing an electrode material mixture and a solvent to prepare a paste, applying the paste onto a current collector such as an aluminum foil, and drying the paste.

As a positive electrode material for constituting the positive electrode layer, any positive electrode material used as the positive electrode active material in a lithium ion battery can be used as appropriate. For example, a lithium-containing positive electrode active material, specifically, a spinel-type lithium transition metal oxide, a lithium metal oxide that has a layered structure, and the like can be used. By using a high-voltage type positive electrode material as the positive electrode material, the energy density can be improved. The positive electrode material may contain, in addition to the positive electrode active material, a conductive material or another material.

As a negative electrode material for constituting the negative electrode layer, any negative electrode material used as the negative electrode active material in a lithium ion battery can be used as appropriate. The solid electrolyte of the present invention is electrochemically stable. For this reason, a lithium metal or a carbon-based material, which is a material that performs charging and discharging at a low potential (about 0.1 V versus Li$^+$/Li) corresponding to the potential of the lithium metal, such as graphite, artificial graphite, natural graphite, or non-graphitizable carbon (hard carbon) can be used as the negative electrode material. By using any of the materials listed above as the negative electrode material, the energy density of the solid-state battery can be improved remarkably. It is also possible to use, as the active material, silicon or tin that is considered to be a promising high capacity material. In a battery in which an ordinary electrolyte solution is used, the electrolyte solution reacts with the active material during charging and discharging, and corrosion occurs on the active material surface, causing remarkable deterioration in the battery characteristics. In contrast, when the solid electrolyte of the present invention is used instead of the electrolyte solution, and silicon or tin is used as the negative electrode active material, a corrosion reaction as described above does not occur, and thus the durability of the battery can be improved. The negative electrode material may also contain, in addition to the negative electrode active material, a conductive material or another material.

**Examples**

Hereinafter, the present invention will be described in further detail based on examples. However, the scope of the present invention is not limited to the examples given below. Unless otherwise stated, the percent sign "%" used herein means "mass%".

**Example 1**

A $Li_2S$ powder, a $P_2S_5$ powder, and a LiCl powder were weighed to satisfy the composition shown in Table 1 given below, such that the total amount was 5 g. These powders were milled and mixed using a wet ball mill with heptane to obtain a mixed composition. The mixed composition was calcined to obtain a calcined product. The calcination was performed using a tubular electric furnace. During the calcination, a 100% pure nitrogen gas was passed through the electric furnace. The calcination temperature was set to 600°C, and the calcination was performed for 4 hours.

The obtained calcined product was disintegrated using a mortar and a pestle. Then, the disintegrated product was milled using a wet ball mill with heptane.

The milled calcined product was dried through vacuum drying to remove heptane. The dried calcined product was classified using a sieve with a mesh size of 1 mm. In this way, an intended solid electrolyte powder was obtained. It was confirmed that the obtained solid electrolyte had an argyrodite-type crystal structure.

**Examples 2 and 3, and Comparative Examples 1 to 3**

In each of Examples 2 and 3 and Comparative Examples 1 to 3, a solid electrolyte powder was obtained in the same manner as in Example 1, except that the raw material powders were mixed to satisfy the composition shown in Table 1, and the calcination conditions shown in Table 1 were used. It was confirmed that the obtained solid electrolyte had an argyrodite-type crystal structure.

**Evaluation**

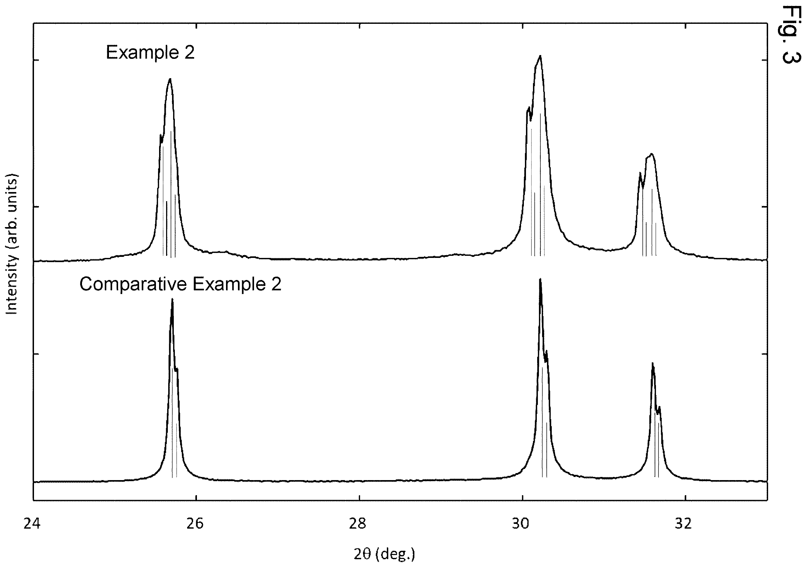

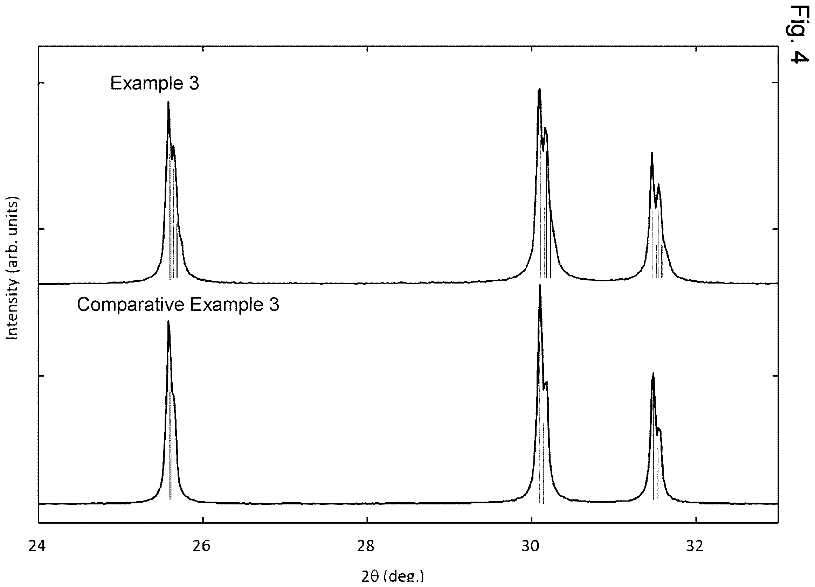

The solid electrolytes obtained in Examples and Comparative Examples were subjected to XRD measurement performed under the following conditions. Also, a diffraction pattern of each of the first to third ranges was subjected to an operation of separating the diffraction pattern into two peaks performed in the manner described below. XRD patterns of the solid electrolytes obtained in Examples 2 and 3, and Comparative Examples 2 and 3 are shown in Figs. 3 and 4. Also, lithium ion conductivity was measured for each of the solid electrolytes obtained in Examples and Comparative Examples in the manner described below. The results are shown in Table 1 given below.

**XRD Measurement**

Each solid electrolyte was subjected to measurement performed without exposing the solid electrolyte to ambient air using a powder X-ray diffractometer SmartLab SE available from Rigaku Corporation. The measurement conditions were as follows.

- X-ray tube voltage: 40 kV
- X-ray tube current: 50 mA
- X rays: CuKα rays (including CuKα1 rays and CuKα2 rays at an intensity ratio of 2:1)
- Optical system: Focused beam method
- Detector: One-dimensional detector
- Measurement range: $2\theta$ = 10 to 120°
- Step width: 0.02°
- Scan speed: 1°/min

**Peak Separation**

In an obtained XRD pattern (represented by $I_{XRD}$ $(2\theta)$), a diffraction pattern in each of the first to third ranges was separated into two peaks $P_1$ and $P_2$ and BG representing the background of the diffraction pattern. Specifically, $P_1$, $P_2$, and BG were derived to satisfy the following equation:

$$I_{XRD} (2\theta) = P_1 + P_2 + BG.$$

The peak separation was performed by performing curve fitting based on a minimum square root method using the Solver function of software Microsoft Excel for Office 365. Here, the peaks $P_1$ and $P_2$ were expressed by the following equations as a function of $2\theta$.

[Math. 1]

$$P_1(2\theta) = I_1 P_{11}(2\theta) + \frac{I_1}{2} P_{12}(2\theta)$$

$$P_2(2\theta) = I_2 P_{21}(2\theta) + \frac{I_2}{2} P_{22}(2\theta)$$

Also, BG was expressed by a linear function connecting two data points at both ends of each of the target ranges of the first to third ranges with a straight line.

Here, $I_1$ and $I_2$ represent a positive constant indicating the intensity of peak $P_1$ and a positive constant indicating the intensity of $P_2$, respectively. $P_{11}$ and $P_{12}$ represent a diffraction line derived from CuK$\alpha$1 rays constituting the peak $P_1$ and a diffraction line derived from CuK$\alpha$2 rays constituting the peak $P_1$, respectively. Likewise, $P_{21}$ and $P_{22}$ represent a diffraction line derived from CuK$\alpha$1 rays constituting the peak $P_2$ and a diffraction line derived from CuK$\alpha$2 rays constituting the peak $P_2$, respectively. When performing the curve fitting, the diffraction lines $P_{11}$ and $P_{12}$ and the diffraction lines $P_{21}$ and $P_{22}$ were expressed as follows using a pseudo Voigt function that is a weighted sum of Lorentzian and Gaussian functions that have an equal half-width.

[Math. 2]

$$P_{11}(2\theta) = \eta_{11} \frac{2}{\pi w_{11}} \left\{ 1 + 4 \left( \frac{2\theta - 2\theta_{11}}{w_{11}} \right)^2 \right\}^{-1}$$

$$+ (1 - \eta_{11}) \frac{2}{w_{11}} \left( \frac{ln2}{\pi} \right)^{1/2} exp \left\{ -4ln2 \left( \frac{2\theta - 2\theta_{11}}{w_{11}} \right)^2 \right\}$$

$$P_{12}(2\theta) = \eta_{12} \frac{2}{\pi w_{12}} \left\{ 1 + 4 \left( \frac{2\theta - 2\theta_{12}}{w_{11}} \right)^2 \right\}^{-1}$$

$$+ (1 - \eta_{12}) \frac{2}{w_{12}} \left( \frac{ln2}{\pi} \right)^{1/2} exp \left\{ -4ln2 \left( \frac{2\theta - 2\theta_{12}}{w_{12}} \right)^2 \right\}$$

$$P_{21}(2\theta) = \eta_{21} \frac{2}{\pi w_{21}} \left\{ 1 + 4 \left( \frac{2\theta - 2\theta_{21}}{w_{21}} \right)^2 \right\}^{-1}$$

$$+ (1 - \eta_{21}) \frac{2}{w_{21}} \left( \frac{ln2}{\pi} \right)^{1/2} exp \left\{ -4ln2 \left( \frac{2\theta - 2\theta_{21}}{w_{21}} \right)^2 \right\}$$

$$P_{22}(2\theta) = \eta_{22} \frac{2}{\pi w_{22}} \left\{ 1 + 4 \left( \frac{2\theta - 2\theta_{22}}{w_{22}} \right)^2 \right\}^{-1}$$

$$+ (1 - \eta_{22}) \frac{2}{w_{22}} \left( \frac{ln2}{\pi} \right)^{1/2} exp \left\{ -4ln2 \left( \frac{2\theta - 2\theta_{22}}{w_{22}} \right)^2 \right\}$$

Here, $\eta_{11}$, $\eta_{12}$, $\eta_{21}$, and $\eta_{22}$ are constants indicating the proportions of Lorentzian components at $P_{11}$, $P_{12}$, $P_{21}$, and $P_{22}$, respectively, and each represent a number of 0 or more and 1 or less.

Also, $2\theta_{11}$, $2\theta_{12}$, $2\theta_{21}$, and $2\theta_{22}$ are positive constants indicating the peak top positions of $P_{11}$, $P_{12}$, $P_{21}$ and $P_{22}$, respectively.

Furthermore, $w_{11}$, $w_{12}$, $w_{21}$, and $w_{22}$ are positive constants indicating the peak widths of $P_{11}$, $P_{12}$, $P_{21}$, and $P_{22}$, respectively.

That is, free parameters used to derive $P_1$ and $P_2$ in the curve fitting are as follows.

$I_1$, $\eta_{11}$, $\eta_{12}$, $\theta_{11}$, $\theta_{12}$, $w_{11}$, $w_{12}$
$I_2$, $\eta_{21}$, $\eta_{22}$, $\theta_{21}$, $\theta_{22}$, $w_{21}$, $w_{22}$

However, from the viewpoint that diffraction lines derived from CuKα1 rays and CuKα2 rays for the same phase must have the same shape, the following constraints were set:

$$\eta_{11} = \eta_{12}, \ w_{11} = w_{12}, \ \eta_{21} = \eta_{22}, \text{ and } w_{21} = w_{22}.$$

In addition, the following constraint was also set:

$\eta_{11}$, $\eta_{12}$, $\eta_{21}$, and $\eta_{22}$ are 0 or more and 1 or less.

Furthermore, the difference between the positions of diffraction lines derived from CuKα1 rays and CuKα2 rays in each of the first to third ranges is theoretically 0.06° or more and 0.08° or less, and thus the following constraints were also set to simplify the peak separation:

$$2\theta_{12} = 2\theta_{11} + 0.07;$$

and

$$2\theta_{22} = 2\theta_{21} + 0.07.$$

The indication of validity of the minimum square root method was set to R < 10.

The following angle difference $\Delta 2\theta$ between $P_1$ and $P_2$ can be obtained through the curve fitting:

$$\Delta 2\theta = 2\theta_{21} - 2\theta_{11}.$$

**Lithium Ion Conductivity**

Each of the solid electrolytes obtained in Examples and Comparative Examples was subjected to uniaxial press molding in a glove box purged with sufficiently dried Ar gas (with a dew point of -60°C or less) by applying a load of about 6 t/cm$^2$. In this way, a sample for lithium ion conductivity measurement composed of a pellet with a diameter of 10 mm and a thickness of about 1 mm to 8 mm was produced. The lithium ion conductivity of the sample was measured using Solartron 1255B available from TOYO Corporation. The measurement was performed at a temperature of 25°C and a frequency of 0.1 Hz to 1 MHz based on an alternating current impedance method.

**[Table 1]**

| | Composition | Calcination conditions | | First range (25.6 ± 0.8°) | | | Second range (30.2 ± 0.8°) | | | Third range (31.6 ± 0.8°) | | | Lithium ion conductivity (mS/cm) |
|---|---|---|---|---|---|---|---|---|---|---|---|---|---|
| | | Atmosphere | Temperature (°C) | $\theta_{11}$ (°) | $\theta_{21}$ (°) | $\Delta 2\theta$ (°) | $\theta_{11}$ (°) | $\theta_{21}$ (°) | $\Delta 2\theta$ (°) | $\theta_{11}$ (°) | $\theta_{21}$ (°) | $\Delta 2\theta$ (°) | |
| Example 1 | $Li_{5.6}PS_{4.4}Cl_{1.8}$ | Nitrogen | 600 | 25.58 | 25.68 | 0.10 | 30.09 | 30.23 | 0.14 | 31.48 | 31.60 | 0.12 | 5.1 |
| Example 2 | $Li_{5.4}PS_{4.4}Cl_{1.6}$ | Nitrogen | 600 | 25.56 | 25.67 | 0.11 | 30.07 | 30.20 | 0.13 | 31.44 | 31.57 | 0.13 | 5.3 |
| Example 3 | $Li_{5.6}PS_{4.8}Cl_{1.2}$ | Nitrogen | 600 | 25.58 | 25.64 | 0.06 | 30.09 | 30.19 | 0.10 | 31.46 | 31.56 | 0.10 | 4.5 |
| Comp. Ex. 1 | $Li_{5.6}PS_{4.4}Cl_{1.8}$ | Nitrogen | 500 | 25.76 | 25.79 | 0.03 | 30.29 | 30.32 | 0.03 | 31.69 | 31.73 | 0.04 | 2.6 |
| Comp. Ex. 2 | $Li_{5.4}PS_{4.4}Cl_{1.6}$ | Nitrogen | 500 | 25.69 | 25.69 | 0.00 | 30.21 | 30.22 | 0.01 | 31.60 | 31.60 | 0.00 | 3.3 |
| Comp. Ex. 3 | $Li_{5.6}PS_{4.8}Cl_{1.2}$ | Nitrogen | 500 | 25.55 | 25.58 | 0.03 | 30.08 | 30.10 | 0.02 | 31.46 | 31.47 | 0.01 | 2.3 |

As is clear from the results shown in Table 1, in each of the solid electrolytes obtained in Examples, when each of the diffraction patterns in the first to third ranges in the XRD diffraction pattern was subjected to peak separation, two different peaks were observed. It can be seen from this that two different types of phases were present in each of the solid electrolytes obtained in Examples. It can also be seen that the solid electrolytes obtained in Examples in each of which two different types of phases were present exhibited higher lithium ion conductivity than the solid electrolytes obtained in Comparative Examples.

**Industrial Applicability**

According to the present invention, it is possible to provide a solid electrolyte that has ion conductivity higher than that of conventional solid electrolytes.

**Claims**

1. A solid electrolyte comprising:

   - a lithium (Li) element;
   - a phosphorus (P) element;
   - a sulfur (S) element; and
   - an X element, where X represents at least one halogen element,

   wherein the solid electrolyte has a peak $P_1$ and a peak $P_2$ when, in an X-ray diffraction pattern obtained by measuring the solid electrolyte with an X-ray diffractometer (XRD) using CuK$\alpha$1 rays and CuK$\alpha$2 rays, a diffraction pattern in at least any one of a range of $2\theta = 25.6 \pm 0.8°$, a range of $2\theta = 30.2 \pm 0.8°$, and a range of $2\theta = 31.6 \pm 0.8°$ is subjected to peak separation, and the peak $P_1$ and the peak $P_2$ are derived from different phases.

2. The solid electrolyte according to claim 1, wherein the solid electrolyte has the peak $P_1$ and the peak $P_2$ when, in the X-ray diffraction pattern obtained by measuring the solid electrolyte with an X-ray diffractometer (XRD) using CuK$\alpha$1 rays and CuK$\alpha$2 rays, diffraction patterns in the ranges of $2\theta = 25.6 \pm 0.8°$, $2\theta = 30.2 \pm 0.8°$, and $2\theta = 31.6 \pm 0.8°$ are subjected to peak separation.

3. The solid electrolyte according to claim 1 or 2, wherein the X element includes at least chlorine (Cl).

4. The solid electrolyte according to any one of claims 1 to 3, wherein the molar ratio (X/P) of the X element to the phosphorus (P) element is greater than 1.0.

5. The solid electrolyte according to any one of claims 1 to 4, wherein an angle difference $\Delta 2\theta$ between the peak $P_1$ and the peak $P_2$ is 0.04° or more.

6. The solid electrolyte according to any one of claims 1 to 5, wherein the solid electrolyte has a crystal phase of an argyrodite-type crystal structure.

7. A method for producing a solid electrolyte, comprising the steps of:

   - obtaining a raw material composition by mixing a lithium (Li) element source, a phosphorus (P) element source, a sulfur (S) element source, and a halogen (X) element source; and
   - calcining the raw material composition at a temperature of higher than 500°C and lower than 700°C.

8. An electrode material mixture comprising:

   - the solid electrolyte according to any one of claims 1 to 6; and
   - an active material.

9. A solid electrolyte layer comprising the solid electrolyte according to any one of claims 1 to 6.

10. A battery comprising:

- a positive electrode layer;
- a negative electrode layer; and
- a solid electrolyte layer provided between the positive electrode layer and the negative electrode layer,

wherein the battery contains the solid electrolyte according to any one of claims 1 to 6.

Fig. 1

Related art

(a) Before peak separation

CuKα1 rays          CuKα2 rays

(b) After peak separation

P₁

P₂

# Fig. 2

The present invention

(a) Before peak separation

P$_{11}$ (CuK$\alpha$1 constituting A$_1$ phase)

P$_{12}$ (CuK$\alpha$2 constituting A$_1$ phase)

P$_{21}$ (CuK$\alpha$2 constituting A$_2$ phase)

P$_{22}$ (CuK$\alpha$1 constituting A$_2$ phase)

(b) After peak separation

P1

P2

Fig. 3

Fig. 4

## INTERNATIONAL SEARCH REPORT

| International application No. |
| --- |
| **PCT/JP2022/009502** |

**A.    CLASSIFICATION OF SUBJECT MATTER**

*H01B 1/06*(2006.01)i; *H01B 1/10*(2006.01)i; *H01B 13/00*(2006.01)i; *H01M 10/0562*(2010.01)i
FI:    H01B1/10; H01M10/0562; H01B1/06 A; H01B13/00 Z

According to International Patent Classification (IPC) or to both national classification and IPC

**B.    FIELDS SEARCHED**

Minimum documentation searched (classification system followed by classification symbols)

H01M10/0562; H01B1/06; H01B1/10; H01B13/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2020/213340 A1 (MITSUI MINING & SMELTING CO., LTD.) 22 October 2020 (2020-10-22) paragraph [0025], comparative example 3 | 7 |
| P, A | WO 2021/054433 A1 (IDEMITSU KOSAN CO., LTD.) 25 March 2021 (2021-03-25) example 2, comparative example 2, fig. 3, 7 | 7 |

☐ Further documents are listed in the continuation of Box C.        ☑ See patent family annex.

| *    Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
| --- | --- |
| **19 April 2022** | **26 April 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
|---|
| **PCT/JP2022/009502** |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☑ Claims Nos.: **1-6,8-10**
   because they relate to parts of the international application that do not comply with the prescribed requirements to such an extent that no meaningful international search can be carried out, specifically:

   Claim 1 cited by claims 2 to 6 and 8 to 10 is characterized in that "the peak $P_1$ and the peak $P_2$ respectively result from different phases".
   However, on consulting the description for peak shapes appearing in a predetermined range in an X-diffraction pattern, it is merely deemed that if the shape can be expressed in combination of two types of peak shapes, then two types of phases (different phases) should be present; it is not confirmed that two types of phases are actually present.
   (Even if it is true that if a certain peak is obtained by combining peaks resulting from two types of phases, then the peak could be expressed in combination of two types of peak shapes, the reverse, that is, the proposition that if a certain peak can be expressed in combination of two types of peak shapes, then the certain peak should be obtained by combining peaks resulting from two types of phases, is not always true.
   First of all, if the peak known for being asymmetric is to be curve-fit in a symmetric function, it is obvious that the shape is prone to being expressed in combination of two types of peak shapes, irrespective of whether the peak is obtained by combining peaks resulting from two types of phases.)
   Thus, the matter wherein "the peak $P_1$ and the peak $P_2$ respectively result from different phases" is not supported by the description.

3. ☐ Claims Nos.:
   because they are dependent claims and are not drafted in accordance with the second and third sentences of Rule 6.4(a).

Form PCT/ISA/210 (continuation of first sheet) (January 2015)

**INTERNATIONAL SEARCH REPORT**
Information on patent family members

| International application No. |
| --- |
| **PCT/JP2022/009502** |

| Patent document cited in search report | | | Publication date (day/month/year) | Patent family member(s) | | | Publication date (day/month/year) |
| --- | --- | --- | --- | --- | --- | --- | --- |
| WO | 2020/213340 | A1 | 22 October 2020 | US | 2022/0098039 | A1 | |
| | | | | paragraph [0027], comparative example 3 | | | |
| | | | | EP | 3957600 | A1 | |
| | | | | CN | 113631507 | A | |
| | | | | KR | 10-2021-0120126 | A | |
| WO | 2021/054433 | A1 | 25 March 2021 | CN | 114207898 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016156064 A1
- EP 3026749 A1